# EUROPÄISCHE PATENTANMELDUNG

(11) **EP 0 677 560 A2**
(43) Veröffentlichungstag der Anmeldung: **18.10.1995**
(21) Anmeldenummer: 95104064.1
(22) Anmeldetag: 20.03.1995
(51) Int. Cl.: C09D 163/00

(54) **Beschichtungsmittel für zementgebundene Untergründe**

(30) Priorität: 19.03.1994 DE 4409467
(71) Anmelder: ispo GmbH, D-65830 Kriftel (DE)
(72) Erfinder: Krausche, Christian, D-64853 Oetzberg (DE); Käpernick, Peter, D-79312 Emmendingen (DE); Klapper, Anne, D-65187 Wiesbaden (DE)
(74) Vertreter: Weber, Dieter, Dr.

(57) **Zusammenfassung**

Russpigmente enthaltende Beschichtungsmaterialien auf Epoxid-Basis werden durch Verbindungen, die aminische, pigmentaffine und hydrophile Gruppen enthalten, stabilisiert.

## Beschreibung

Es ist bekannt, zementgebundene Untergründe, wie begehbare und befahrbare Flächen, Industrieböden, Garagen und der Verwitterung oder chemischen Einflüssen ausgesetzte Wandungen zur Verbesserung ihrer mechanischen und chemischen Belastbarkeit mit selbstverlaufenden, gefüllten und pigmentierten Beschichtungsmaterialien auf Epoxidharzbasis zu vergüten. Diese meist zweikomponentigen, kalthärtenden Beschichtungen werden in unterschiedlichsten Farben hergestellt und eingesetzt. Die Einstellung genormter RAL-Farbtöne erfolgt dabei im allgemeinen mit Mischungen von Pigmenten verschiedenster chemischer Zusammensetzung, Kornfeinheit und Provenienz. Für begehbare bzw. befahrbare Untergründe wie Industrieböden werden dabei Grautöne bevorzugt, wobei zur Variation der hell-dunkel-Einstellung hochwirksame feindisperse Russqualitäten verwendet werden.

Zur Gewährleistung eines gleichmässigen Farbtons in den verlegten Flächen ist es erforderlich, den bei der Herstellung des Beschichtungsmaterials erzielten hohen Dispergiergrad des Füllstoff-Pigmentgemischs über die Mischstufe hinaus auch über die Verfahrensschritte der Abfülllung, des Transports, der Lagerung, Verlegung und Aushärtung zu konservieren. Pigment-Entmischungen, einschliesslich Pigmentmischungs-Auftrennungen jeglicher Art z.B. in Form von Reflockulation oder Ausschwimmen müssen ausgeschlossen werden. Russqualitäten, die zwar preislich und auch in ihrer Farbausbeute hochwirksam sind, neigen zu Entmischungsvorgängen und sind insbesondere hinsichtlich ihrer Ausschwimmneigung besonders kritisch.

Es ist zwar schon bekannt, Dispergieradditive für die Dispergierung und die Konservierung des Dispergiergrades zu verwenden. Die Dispergieradditive können dabei unterschiedliche Wirkungsweisen haben. So sind Dispergieradditive vom Typ A flockulierende Dispergiermittel. Hierbei handelt es sich meist um Salze, insbesondere von Carbonsäuren, z.B. Lösungen höhermolekularer Carbonsäuresalze von Polyaminamiden, meist elektroneutraler Ionogenität, Lösungen von Alkylolammoniumsalzen ungesättigter Fettsäuren, anionisch oder von Lösungen höhermolekularer, ungesättigter Polycarbonsäuren anionischen Charakters, während es sich beim Typ B um deflockulierende Dispergiermittel handelt, meist phosphorsaure Gruppen enthaltende Träger, wie Lösungen phosphorsaure Gruppen aufweisender, gesättigter Polyester oder Lösungen hochmolekularer Copolymeren auf Polyester/Polyurethan-Basis mit pigmentaffinen aminischen Gruppen.

Beide Typen besitzen Haftungsgruppen, die einerseits pigmentaffin und andererseits auf das jeweils verwendete Bindemittel abgestimmt sind. Die flockulierenden Dispergiermittel vom Typ A bewirken eine Ueberführung von mehreren Einzelpigmentteilchen in einen kontrollierten, losen Verbund, während die deflockulierenden Dispergiermittel vom Typ B die Einzelteilchen z.B. sterisch an einer Wiederannäherung hindem. Die Dispergiermittel des Typs A besitzen den Vorteil einer Breitbandanwendung, d.h. es werden zahlreiche unterschiedliche Pigmentarten wirksam erfasst, reduzieren jedoch die Fliessfähigkeit der Beschichtungsmasse, da sich die Rheologie vom Newtonschen Fliessverhalten in Richtung thixotroper Strukturen verändern. Die Dispergieradditive des Typs B unterstützen zwar das Newtonsche Fliessverhalten, haben jedoch den Nachteil verringerter Bandbreite aufgrund spezifischer Pigmentausrichtung.

Bei Russpigmenten ist mit kontrolliert flockulierenden Dispergiermitteln eine Verbesserung des Ausschwimmungsverhaltens nur mit hohen Dispergiermitteldosierungen um den Preis einer erheblichen Beeinträchtigung des Fliessverhaltens zu erzielen. Dem Zugriff deflockulierend wirkender Dispergiermittel entziehen sich Russpigmente andererseits völlig.

Es wurde nun gefunden, dass überraschenderweise in Beschichtungsmitteln auf Epoxidharzbasis enthaltende Russpigmente durch für wasserverdünnbare Lacksysteme bestimmte Dispergieradditive mit aminischen pigmentaffinen und hydrophilen Gruppen bzw. Strukturen stabilisiert werden können. Gegenstand der Erfindung sind demzufolge Beschichtungsmittel auf der Basis härtbarer Epoxide mit Gehalten an Russpigmenten, Dispergieradditiven und gegebenenfalls weiteren Bestandteilen wie Reaktivverdünner, Füllstoffen, viskositätsbeeinflussenden Mitteln, weiteren Pigmenten und dergleichen, wobei erfindungsgemäss Verbindungen mit aminischen pigmentaffinen und hydrophilen Gruppen bzw. Strukturen enthalten sind. Die Wirkung der erfindungsgemäss enthaltenen Dispergieradditive ist umso überraschender als es sich bei den erfindungsgemässen Beschichtungsmitteln um regelmässig lösungsmittelfreie Mittel handelt. Als aminische Gruppen haben sich primäre, vorzugsweise sekundäre Aminogruppen, zB Alkyl-substituierte Aminogruppen besonders bewährt. Beispiele hydrophiler Gruppen sind Hydroxy-Gruppen.

Die Wirkgruppen der Dispergieradditive sind auf im wesentlichen inerten Trägern, vorzugsweise organischen Polymeren angeordnet. Neben Polyestern, Polyäthern und Polyalkylenen haben sich Polyurethane und Block-Polymere auf Polyester/Polyurethan-Basis besonders bewährt. Bevorzugt ist der Einsatz dieser Dispergiermittel als Lösung, zB in Estern wie Butylacetat, Glykoläthern und dergleichen.

Die erfindungsgemäss enthaltenen Dispergieradditive verringern bereits in sehr geringen Konzentrationen die Reflockulation bzw. das Ausschwimmen der Russpigmente, ohne dass negative Auswirkungen auf das Fliessverhalten hätten festgestellt werden können. Von weiterem Vorteil ist, dass auch weitere anorganische Pigmente, wie beispielsweise Eisenoxide, Titandioxid und dergleichen enthalten sein können, ohne nachteilige Beeinträchtigung der Stabilität und unter Aufrechterhaltung des Fliessverhaltens. Der Russanteil im Gesamtpigmentgehalt kann in weiten Bereichen von 0,1 bis 20 Gew.-%, insbesondere im Bereich von 0,5 bis 15 Gew.-%, jeweils bezogen auf den Gesamtpigmentgehalt, schwanken.

Die Dispergieradditivmenge liegt regelmässig im Bereich von 0,01 bis 3 Gew.-%, bezogen auf das Gesamtgewicht. Bevorzugt sind Bereiche von 0,02 bis 1 Gew.-% Dispergieradditive. Als härtbare Epoxide haben sich insbesondere Bisphenol-A-Epoxide, z.B. eines Molgewichts bis ca. 1000, Bisphenol-F-Epoxide und Novolak bewährt. Die Epoxide sind im allgemeinen in Mengen von 20 bis 80 Gew.-%, insbesondere 25 bis 60 Gew.-%, bezogen auf die Gesamtmasse einschliesslich Reakltivverdünner, Füllstoff und dergleichen, sofern vorhanden, enthalten.

Die Reaktivverdünner können sowohl monofunktionell wie z.B. Versaticsäureglycidester oder 2-Ethylhexylglycidether als auch bifunktionell wie Neopentyldiglycidylether oder 1,6 Hexandioldiglycidylether sein. Die Reaktivverdünner liegen vorzugsweise in Mengen von 5 bis 50 Gew.-%, insbesondere 6 bis 25 Gew.-%, bezogen auf das Gesamtgewicht aus Epoxid und Reaktivverdünner vor. Als Russpigmente werden bervorzugt Flammruss z.B. der Partikelgrösse von 10 bis 100 µm und mit Oberflächen von 150 - 300 m²/g verwendet. Füllstoffe, sofern vorhanden, können beispielsweise in Mengen von 10 bis 80 Gew.-%, bezogen auf die Gesamtmasse, enthalten sein.

Zur Härtung der Epoxide können die üblichen Härtungsmittel, insbesondere aliphatische Amine, aromatische Amine, cycloaliphatische Amine, araliphatische Amine, meist in Form von Blends, Addukten mit Epoxidverbindungen, Mannichbasen oder Polyaminoamiden verwendet werden.

Die vorliegenden Beschichtungsmittel haben sich vor allem für begehbare und befahrbare zementgebundene Böden, einschliesslich Garagen wie Tiefgaragen, Industriefussböden, Lagerhallen, Sporthallen und dergleichen bewährt.

Die erfindungsgemässen Massen können in üblicher Weise in einem Dissolver durch Mischen der Bestandteile bis zur Homogenisierung hergestellt werden. Die nachfolgenden vergleichenden Darstellungen lassen die überraschenden Ergebnisse erkennen.

### Ausführungsbeispiele

In einem Dissolver werden folgende Beschichtungsmassen hergestellt:

| | Beispiel 1 | Beispiel 2 | Beispiel 3 |
|---|---|---|---|
| Epoxidharz ¹ | 400 Gew.Teile | 400 Gew. Teile | 400 Gew. Teile |
| Reaktivverdünner² | 30 Gew. Teile | 30 Gew. Teile | 30 Gew. Teile |
| Dispergieradditiv | 3 Gew. Teile Deflock. Additiv | 3 Gew. Teile Deflock. Additiv | 3 Gew. Teile erfindungsgemäss |
| Titandioxid RN 59 | 30 Gew. Teile | 30 Gew. Teile | 30 Gew. Teile |
| Flammruss 101 | 5 Gew. Teile | 5 Gew. Teile | 5 Gew. Teile |
| Füllstoff Carborex 10 | 400 Gew. Teile | 400 Gew. Teile | 400 Gew. Teile |
| Weichmacher³ | 40 Gew. Teile | 40 Gew. Teile | 40 Gew. Teile |

| | | | |
|---|---|---|---|
| ¹ Bisphenol A, MG <700 | | | |
| ² Ethylhexylglycidether | | | |
| ³ Benzylalkohol | | | |

Nach erfolgter Dispergierung, Abkühlung und Zugabe einer stöchiometrischen Menge eines geeigneten aminischen Härters wurden folgende Kennwerte bestimmt:

| | Prüfmethode | Beispiel 1 | Beispiel 2 | Beispiel 3 |
|---|---|---|---|---|
| Viskosität der Mischung | DIN-Auslaufbecher | 260 sec. 4 mm Düse | 300 sec. 4 mm Düse | 265 sec. 4 mm Düse |
| Fliessvermögen der Masse | Ausbreitmass auf ebener Unterlage | Durchmesser 31 cm | Durchmesser 27,5 cm | Durchmesser 30,5 cm |
| Rubout-Test | Farbveränderung nach Eingriff im freien Film | | | |
| nach 10 min. | | leicht sichtbar | leicht sichtbar | nicht sichtbar |
| nach 30 min. | | sichtbar | sichtbar | nicht sichtbar |
| nach 30 min. | | sichtbar | deutl. sichtbar | nicht sichtbar |
| Visuelle Beurteilung des freien Films | optisch | flockuliertes Ausschwimmen von Russbestandteilen | flächiges nicht flockuliertes Ausschwimmen von Russbestandteilen | kein Ausschwimmen |

## Patentansprüche

1. Beschichtungsmittel für zementgebundene Untergründe auf der Grundlage härtbarer Epoxide mit einem Gehalt an Russpigmenten und Dispergieradditiven, gegebenenfalls mit weiteren Bestandteilen wie Reaktivverdünner, Füllstoffen, weiteren Pigmenten, viskositätsbeeinflussenden Mitteln, **dadurch gekennzeichnet**, dass aminische, pigmentaffine und hydrophile Gruppen enthaltende Verbindungen als Russpigment-Dispergieradditive enthalten sind.

2. Beschichtungsmittel gemäss Anspruch 1, dadurch gekennzeichnet, dass das Dispergieradditiv in einer Menge von 0,01 bis 3 Gew.-%, insbesondere 0,02 - 1 Gew.-%, bezogen auf das Gesamtgewicht des Beschichtungsmittels enthalten ist.

3. Beschichtungsmittel gemäss Anspruch 1 oder 2, dadurch gekennzeichnet, dass Pigmentgemische mit einem Russpigmentanteil von 0,01 - 20 Gew.-%, bezogen auf den Gesamtpigmentgehalt enthalten sind.

4. Verwendung der Beschichtungsmittel gemäss einem der vorhergehenden Patentansprüche zur Beschichtung von begehbaren und befahrbaren Böden einschliesslich Garagen und Industriefussböden.
